# FASCICULE DE BREVET EUROPEEN

(11) **EP 3 234 854 B1**
(45) Date de publication et mention de la délivrance du brevet: **06.10.2021**
(21) Numéro de dépôt: 15817475.5
(22) Date de dépôt: 04.12.2015
(51) Int. Cl.: G06F 21/62, G06F 21/35, H04W 12/04, H04W 12/084

(54) **TECHNIQUE DE CONTROLE DE LECTURE D'UN OBJET NUMERIQUE**
TECHNIK ZUR STEUERUNG DES LESENS EINES DIGITALEN OBJEKTS
TECHNIQUE FOR CONTROLLING THE READING OF A DIGITAL OBJECT

(30) Priorité: 18.12.2014 FR 1462770
(43) Date de publication de la demande: 25.10.2017
(73) Titulaire: ORANGE, 92130 Issy-les-Moulineaux (FR)
(72) Inventeur: AUVRAY, Vincent, 50120 Equerderville-Hainneville (FR)
(86) Numéro de dépôt international: PCT/FR2015/053332
(87) Numéro de publication internationale: WO 2016/097523

(56) Documents cités:
- US-A1- 2010 062 743
- US-A1- 2014 245 393
- None

## Description

L'invention se rapporte au domaine général des télécommunications.

L'invention concerne plus particulièrement un contrôle de lecture d'au moins un objet numérique par un utilisateur muni d'un dispositif utilisateur.

Par objet numérique, on entend tout objet numérique contenant des informations numériques telles que par exemple des informations numériques multimédia. A titre d'exemples non limitatifs, les objets numériques peuvent être des contenus numériques comme de la musique, de la vidéo, un livre numérique, un logiciel, une application, etc.

On connait des systèmes de distribution d'objets numériques dans lesquels une lecture en continu (ou « streaming » en anglais) est mise en œuvre au niveau d'un dispositif de lecture numérique. L'objet numérique est diffusé en continu et n'est pas mémorisé en principe au niveau du dispositif de lecture. Un accès à un réseau de communication est nécessaire pour obtenir cette lecture en continu.

D'autres systèmes de distribution d'objets numériques permettent un téléchargement d'objet numérique sur le dispositif de l'utilisateur. L'utilisateur dispose alors de l'objet numérique et peut le lire en fonction de droits de lecture qui lui ont été attribués par le système. Lors de la lecture, l'objet numérique est disponible localement au niveau du dispositif de l'utilisateur et aucun accès au réseau de communication n'est nécessaire.

A titre d'exemple illustratif, il est ainsi possible dans un moyen de transport, tel qu'un avion, de proposer des objets numériques à la location pour la durée du voyage. Le droit de lecture est attribué uniquement par le fournisseur de l'objet pour ce cas d'usage. Pour être certain que la lecture s'effectue lors du voyage, le droit de lecture est par exemple limité dans le temps, de l'ordre de la durée du voyage.

Dans d'autres cas d'usage, tel qu'une attente avant un voyage, il est difficile de définir la limite dans le temps à appliquer. C'est également le cas pour une mise à disposition d'un objet numérique dans un lieu collectif, par exemple des journaux dans un restaurant.

Il existe également des systèmes de distribution d'objets numériques, pour lesquels il est prévu une localisation géographique du dispositif utilisateur. La localisation géographique est effectuée par une entité de confiance avant la lecture de l'objet. Toutefois, cette solution nécessite un échange de données avec l'entité de confiance. On comprend ainsi que cette solution est difficile à mettre en œuvre dans un moyen de transport en mobilité.

Un des buts de l'invention est de remédier à des insuffisances/inconvénients de l'état de la technique et/ou d'y apporter des améliorations.

Selon un premier aspect, l'invention a pour objet un procédé de contrôle de lecture selon la revendication 1.

Il est ainsi possible de contrôler la lecture de l'objet numérique en fonction de la présence ou non du dispositif utilisateur dans une zone de couverture radio d'un dispositif émetteur. Ceci présente l'intérêt de requérir uniquement la supervision de la réception d'un signal radio émis par le dispositif émetteur. Tant que le dispositif utilisateur se situe dans la portée radio du dispositif émetteur, la lecture peut être autorisée. Le contrôle de la lecture est ainsi mis en œuvre uniquement localement au niveau du dispositif utilisateur.

De plus, lorsque le dispositif utilisateur se situe dans un moyen de transport en mouvement, sa situation est évaluée par rapport à un dispositif émetteur situé également dans ce moyen de transport. Aucune communication avec des moyens de localisation géographique terrestres, tels qu'une localisation satellite GPS, ou bien une localisation en fonction d'un identifiant de cellule d'un réseau cellulaire, n'est nécessaire. La localisation du dispositif utilisateur est ainsi relative au dispositif émetteur, qui est lui-même en mouvement. De plus, la zone de lecture peut être définie de manière plus précise qu'en utilisant des moyens de localisation terrestres.

Il est ainsi possible d'offrir un service de distribution d'objets numériques pour lequel l'opérateur apporte la garantie au fournisseur des objets numériques d'une lecture contrôlée et limitée à une zone de lecture. Cette technique de contrôle est très simple à mettre en œuvre pour un opérateur. Le dispositif émetteur peut être intégré à une station de distribution d'objets numériques, ou situé sur un même site que la station ou bien encore se situer dans une zone de couverture radio de la station.

De plus, ceci permet de garantir que le dispositif utilisateur se situe toujours dans une zone où l'objet numérique a été distribué. A titre d'exemple illustratif, des magazines mis à disposition dans un café doivent être lus dans ce même café.

Le dispositif émetteur peut être de technologie radio basse consommation. Ceci permet de limiter la consommation énergétique du dispositif utilisateur pour vérifier la réception de la donnée au moyen d'un canal de communication radio. L'objet numérique peut ainsi être distribué par l'intermédiaire d'un canal de communication radio permettant un débit élevé et ne nécessiter pour sa lecture uniquement d'une supervision d'une technologie radio basse consommation.

Les différents modes ou caractéristiques de réalisation mentionnés ci-après peuvent être ajoutés indépendamment ou en combinaison les uns avec les autres, aux étapes du procédé de contrôle de lecture tel que défini précédemment.

Selon une caractéristique particulière du procédé de contrôle, l'objet numérique étant protégé au moyen d'une clé secrète, une clé publique associée à la clé secrète est reçue en provenance du dispositif émetteur.

La clé publique permettant de déchiffrer l'objet numérique ne peut être obtenue qu'en se situant dans la zone de couverture radio du dispositif émetteur. L'objet numérique est ainsi sécurisé et une garantie supplémentaire de la présence du dispositif utilisateur dans la zone de lecture est apportée au fournisseur d'objets numériques.

Selon une caractéristique particulière, le procédé de contrôle comprend une estimation d'une distance entre le dispositif utilisateur et le dispositif émetteur, et la lecture est limitée à une partie de l'objet numérique en fonction de la distance estimée.

Ceci permet d'ajuster la taille de la zone de lecture en définissant un seuil de distance au-dessus duquel la lecture est bloquée ou au moins limitée. L'utilisateur peut être ainsi incité à se rendre dans un lieu dans lequel la lecture est autorisée.

Selon un deuxième aspect, l'invention concerne également un dispositif utilisateur selon la revendication 4.

Ce dispositif utilisateur peut bien sûr comporter les différentes caractéristiques relatives au procédé de contrôle de lecture tel que décrit précédemment, qui peuvent être combinées ou prises isolément. Ainsi, les avantages énoncés pour le procédé de contrôle de lecture selon le premier aspect sont transposables directement au dispositif utilisateur. Par conséquent, ils ne sont pas détaillés plus amplement.

Selon un troisième aspect, l'invention concerne également un système de contrôle de lecture, comprenant au moins un dispositif émetteur, agencé pour émettre au moins une donnée au moyen d'un canal de communication radio et au moins un dispositif utilisateur selon le deuxième aspect.

Ce système peut bien sûr comporter les différentes caractéristiques relatives au procédé de contrôle de lecture tel que décrit précédemment, qui peuvent être combinées ou prises isolément. Ainsi, les avantages énoncés pour le procédé de contrôle de lecture selon le premier aspect sont transposables directement au système. Par conséquent, ils ne sont pas détaillés plus amplement.

Selon un quatrième aspect, l'invention concerne un programme pour un dispositif utilisateur, comprenant des instructions de code de programme destinées à commander l'exécution de celles des étapes du procédé de contrôle de lecture précédemment décrit mises en œuvre par le dispositif utilisateur, lorsque ce programme est exécuté par ce dispositif et un support d'enregistrement lisible par un dispositif sur lequel est enregistré un programme pour un dispositif.

Les avantages énoncés pour le procédé de contrôle de lecture selon le premier aspect sont transposables directement au programme pour un dispositif utilisateur et au support d'enregistrement.

La technique de contrôle de lecture d'un objet numérique sera mieux comprise à l'aide de la description suivante de modes de réalisation particuliers, en référence aux dessins annexés sur lesquels :
- la figure 1 représente un dispositif utilisateur se trouvant dans une zone de lecture dans un mode de réalisation particulier ;
- les figures 2a et 2b illustrent des étapes d'un procédé de contrôle de lecture mises en œuvre par un dispositif utilisateur selon des modes particuliers de réalisation ;
- la figure 3 représente un dispositif utilisateur selon un mode particulier de réalisation.

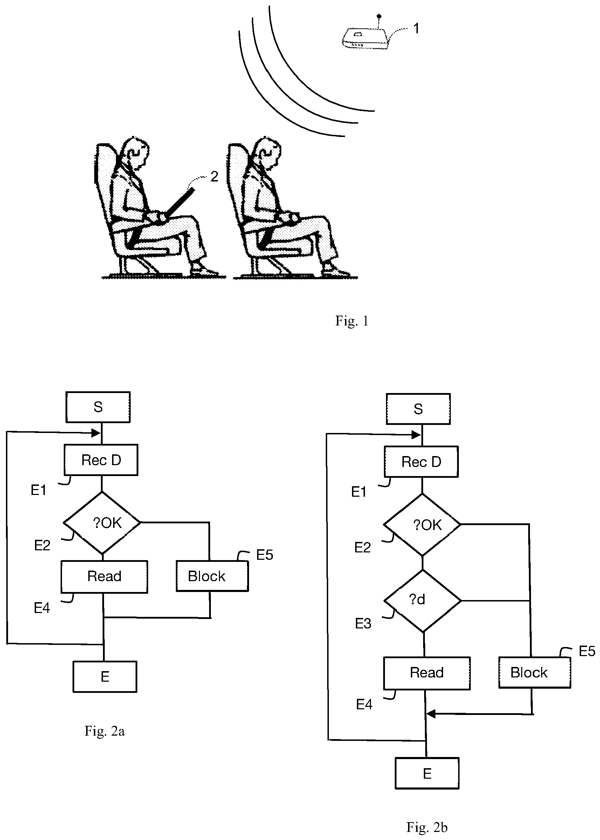

La **figure 1** représente un environnement dans lequel une zone de lecture d'un objet numérique mis à disposition d'un dispositif utilisateur 2 est définie.

Sur la figure 1, sont représentés deux utilisateurs assis dans un avion. Un des deux utilisateurs utilise le dispositif utilisateur 2. Ce dispositif utilisateur 2 est par exemple une tablette numérique, un téléphone intelligent (ou « smartphone » en anglais), un ordinateur portable, .. Aucune limitation n'est attachée au nombre de dispositifs utilisateur présents dans la zone de lecture, ni au type de ces dispositifs utilisateur. Bien évidemment, on comprend ici que le dispositif utilisateur comprend un module de lecture numérique qui est apte à lire le contenu d'un objet numérique.

Par objet numérique, on entend tout objet numérique contenant des informations numériques telles que par exemple des informations numériques multimédia. A titre d'exemples non limitatifs, les objets numériques peuvent être des contenus numériques comme de la musique, de la vidéo, un livre numérique, un logiciel, une application, etc.

Cet environnement comprend un point d'accès 1 sans fil. Un tel point d'accès permet par exemple à des dispositifs utilisateur sans fil d'accéder à un réseau de communication étendu, tel que le réseau Internet.

Dans un mode de réalisation particulier, ce point d'accès 1 joue un rôle de station de distribution d'objets numériques. La station de distribution d'objets numériques permet un accès à une librairie numérique, proposant des objets numériques mis à disposition pour un téléchargement par un dispositif utilisateur. La librairie numérique peut être locale à la station de distribution ou bien à distance. Ces objets numériques peuvent être prêtés ou loués.

Le point d'accès 1 permet de télécharger localement et à haut débit un objet numérique pour une lecture ultérieure. Lorsque l'utilisateur souhaite obtenir un objet numérique, ce dernier est téléchargé par l'intermédiaire d'un réseau de communication, de débit en général élevé. Il s'agit par exemple d'un réseau de communication radio, par exemple conforme à la norme IEEE 802.11g. Il est ici souligné qu'aucune limitation n'est attachée au mode de distribution des objets numériques. Il peut également s'agir d'un réseau de communication filaire (USB, Firewire,...) ou optique (infrarouge, Li-Fi,...). On se place par la suite à titre illustratif dans des modes de réalisation pour lesquels la distribution s'effectue au moyen d'un canal de communication radio.

Une telle offre de distribution d'objets numériques peut notamment être proposée dans des moyens de transport (train, avion), dans des zones d'attente (zone d'embarquement, salle d'attente, ...), des zones de loisir (café, restaurant,...). Il est ici souligné que cette offre de distribution ne nécessite pas pour le dispositif utilisateur 2 un accès direct à un réseau de communication étendu, tel que le réseau Internet. Les objets numériques sont disponibles directement auprès de la station de distribution au moyen d'un canal de communication radio ou autre.

L'opérateur de cette station de distribution souhaite contrôler la lecture de l'objet numérique téléchargé et la limiter à une zone de lecture. Cette limitation peut par exemple être définie dans un accord entre le fournisseur de l'objet numérique et le distributeur de cet objet. Ainsi, pour une station de distribution installée dans un avion, les droits ont été négociés pour une lecture s'effectuant uniquement dans l'avion. Il peut également s'agir d'une offre de service locale, permettant à un propriétaire des locaux de se différencier de ses concurrents. Ainsi, il est d'usage de consulter gratuitement des périodiques (journaux, magazines) mis à disposition dans un café ou un restaurant. Cet usage peut alors être proposé sous la forme d'objets numériques correspondant aux périodiques.

La zone de lecture définit ainsi une zone dans laquelle la lecture de l'objet numérique est autorisée. En dehors de cette zone de lecture, la lecture de l'objet numérique est bloquée. Pour bloquer la lecture de l'objet numérique, différentes alternatives sont envisageables, jusqu'à la suppression de l'objet numérique du dispositif utilisateur. La suppression de l'objet numérique permet en effet de garantir que l'objet numérique ne pourra être lu ultérieurement après suppression d'éventuels mécanismes de protection.

Dans un premier mode de réalisation, l'utilisateur est notifié de la disponibilité d'une telle offre de distribution numérique par l'intermédiaire d'un deuxième réseau de communication radio, de type basse consommation selon une technologie d'accès, adaptée pour des réseaux personnels sans fil, telle que Bluetooth ®, Z-Wave ®. Ce type de réseau radio permet d'assurer une couverture radio dans une zone appelée WPAN (pour « Wireless Personal Area Network »).

La technologie Bluetooth ® s'appuie sur la spécification IEEE 802.15.1 "Wireless Médium Access Control (MAC) and Physical Layer (PHY) Spécifications for Wireless Personal Area Networks (WPANs)" et opère dans la bande de fréquences de 2.4 GHz. Il existe également une version basse consommation de cette technologie, connue sous la dénomination BLE « Bluetooth Low Energy ». Cette technologie BLE est définie par un groupe de normalisation Bluetooth SIG sous la forme d'un ensemble de documents, nommé « Bluetooth Core Spécification 4.1 ».

La technologie Z-Wave ® s'appuie sur des produits certifiés par l'Alliance Z-Wave et opère dans la bande de fréquences de 868,42 MHz.

Un dispositif émetteur émet, plus précisément diffuse, un signal balise conformément à la technologie du deuxième réseau de communication. Ce signal balise est également appelé « Beacon », et indique qu'un service de lecture d'objets numériques est offert. Un identifiant de ce service de lecture est diffusé au moyen du signal balise.

Dans un mode de réalisation particulier, le signal balise indique également que le service de distribution d'objets numériques est offert. Un identifiant, identique ou non à celui du service de lecture, est diffusé au moyen du signal balise. Sur demande de l'utilisateur, l'objet numérique est distribué par l'intermédiaire du premier réseau de communication, au débit généralement plus élevé que celui du deuxième réseau de communication radio.

Le dispositif émetteur peut être intégré au point d'accès 1 et le point d'accès joue ainsi le rôle du dispositif émetteur. Le dispositif émetteur peut également être colocalisé avec le point d'accès dans un même site physique d'émission, ou bien encore se trouver dans une zone de couverture du point d'accès 1.

Dans ce premier mode de réalisation, la zone de lecture est définie par tout ou partie de la couverture radio du dispositif émetteur appartenant au deuxième réseau de communication radio. Un dispositif utilisateur est situé dans une zone de couverture radio lorsqu'il reçoit un signal émis par un dispositif émetteur. Ce premier mode de réalisation présente l'avantage de limiter la consommation énergétique du dispositif utilisateur pour rechercher la présence ou non d'un dispositif émetteur, et pour obtenir ainsi l'information qu'il se situe dans la zone de lecture.

Il est ici souligné que plusieurs dispositifs émetteurs peuvent être associés à un point d'accès jouant un rôle de station de distribution d'objets numériques. Un des dispositifs émetteurs est par exemple colocalisé avec le point d'accès. D'autres dispositifs émetteurs sont répartis pour définir la zone de lecture. Par exemple, pour une zone de lecture correspondant à une zone de couverture radio du point d'accès 1 jouant le rôle de station de distribution, plusieurs dispositifs émetteurs sont associés avec le point d'accès 1 pour permettre une couverture radio quasiéquivalente à celle de la zone de couverture radio de ce point d'accès.

Il est également possible de déployer des dispositifs émetteurs de manière à assurer une couverture radio sur une zone couronne centrée sur le point d'accès. Ceci permet de détecter l'entrée du dispositif utilisateur dans la zone de lecture suite à une détection d'un signal balise. Le nombre de dispositifs émetteurs à prévoir est inférieur à celui à prévoir pour une couverture complète de la zone de couverture radio. Le déploiement du réseau de dispositifs émetteurs est ainsi moins coûteux.

Dans un deuxième mode de réalisation, l'utilisateur est notifié de la disponibilité d'une telle offre de distribution d'objets numériques par l'intermédiaire du réseau de communication radio, qui permet la distribution des objets numériques. Dans ce deuxième mode de réalisation, la zone de lecture est définie par tout ou partie de la couverture radio du point d'accès 1 pour la technologie du réseau de communication radio, par l'intermédiaire duquel l'objet numérique est distribué.

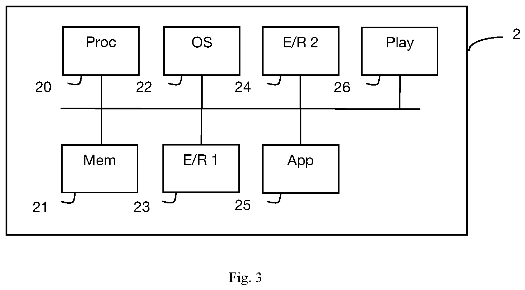

La **figure 3** représente un dispositif utilisateur 2 dans un mode particulier de réalisation. Le dispositif utilisateur 2 comprend notamment :
- une zone mémoire 21, agencée pour mémoriser une application qui comprend des instructions de code pour mettre en œuvre les étapes du procédé de contrôle de lecture ;
- une mémoire de stockage, non représentée, agencée pour stocker des données utilisées lors de la mise en œuvre du procédé de lecture ;
- un processeur 20 pour exécuter des instructions de code de modules logiciels ;
- un module 22 système d'exploitation, par exemple Android ou iOS :
- un module d'interface 23 avec un premier réseau de communication, agencé pour émettre et recevoir des données, par exemple des objets numériques ;
- un module de contrôle de lecture 25 ;
- un module de lecture 26 d'un objet numérique.

Dans un mode de réalisation, la distribution des objets numériques s'effectue au moyen d'un canal de communication radio. Dans ce mode de réalisation, le module d'interface 23 est par exemple conforme à la technologie radio IEEE 802.11g ou Wi-Fi.

Pour une mise en œuvre dans un environnement décrit précédemment (un ou des dispositifs émetteurs associés à un point d'accès), le dispositif utilisateur 2 comprend en outre un deuxième module d'interface 24, agencé pour recevoir des données au moyen d'un canal de communication radio d'un deuxième réseau de communication sans fil. Le deuxième module d'interface radio 24 est par exemple conforme à la technologie radio basse consommation, par exemple BLE.

Il est ici souligné que le dispositif utilisateur 2 comprend également d'autres modules de traitement, non représentés sur la figure 3, agencés pour mettre en œuvre les différentes fonctions de dispositif utilisateur.

Nous allons maintenant décrire la technique de contrôle de lecture dans un mode particulier de réalisation, telle qu'elle est mise en œuvre par un dispositif utilisateur 2, en relation avec la **figure 2a****.**

Par la suite, on se place dans un mode de réalisation où le point d'accès 1 jouant le rôle de la station de distribution d'objets numériques comprend également le dispositif émetteur radio basse consommation, par exemple BLE. Par conséquent, le dispositif utilisateur 2 considéré comprend un premier module d'interface radio 23, par exemple IEEE 802.11g, et un deuxième module d'interface radio 24, par exemple BLE.

On suppose qu'un objet numérique a été téléchargé préalablement auprès d'une station de distribution et est mémorisé localement par le dispositif utilisateur 2.

L'utilisateur interagit avec le dispositif utilisateur 2 afin de démarrer la lecture de l'objet numérique. Le module de lecture 26 transmet alors une requête au module de contrôle 25, afin de vérifier si la lecture est autorisée. Le module de contrôle 25 déclenche alors l'exécution des étapes suivantes.

Dans une étape E1, le dispositif utilisateur 2 recherche un signal balise (« Beacon ») émis, plus précisément diffusé, par un dispositif émetteur conforme à la deuxième technologie radio et reçoit une donnée au moyen d'un canal de communication radio. Plus précisément, le deuxième module d'interface radio 24 détecte le signal balise et transmet une information de détection du signal balise au module de contrôle 25. L'information de détection correspond à une donnée reçue par l'intermédiaire du signal balise et indiquant qu'un service de lecture associé au service de distribution est offert. Un identifiant de ce service de lecture est diffusé au moyen du signal balise. Il peut être identique à l'identifiant du service de distribution.

Dans une étape E2, le dispositif utilisateur 2 vérifie qu'une donnée a bien été reçue pour le service de lecture.

Si tel est le cas, dans une étape E4, le dispositif utilisateur 2 commence ou poursuit la lecture de l'objet numérique selon les cas. Plus précisément, le module de contrôle 25 commande au module de lecture 26 de démarrer ou de reprendre la lecture de l'objet numérique.

Dans le cas contraire, dans une étape E5, le dispositif utilisateur 2 bloque la lecture de l'objet numérique. L'absence de réception d'une donnée pour le service de lecture fait suite par exemple à un déplacement du dispositif utilisateur en dehors de la zone de couverture radio du dispositif émetteur. Plus précisément, le module de contrôle 25 commande au module de lecture 26 d'arrêter ou de suspendre la lecture de l'objet numérique.

Dans tous les cas, le dispositif utilisateur 2 exécute de nouveau l'étape El de réception d'une donnée.

Ainsi, dans ce mode de réalisation, la lecture de l'objet numérique est conditionnée par la réception d'une donnée pour le service de lecture au moyen d'un canal de communication radio. La donnée pour le service de lecture indique qu'un service de lecture est offert. Tant que le dispositif utilisateur 2 se situe dans la portée radio du dispositif émetteur pour la technologie BLE, la lecture est autorisée. La zone de lecture est définie par la portée radio du dispositif émetteur pour la technologie BLE. Ce mode de réalisation présente l'intérêt de requérir pour le dispositif utilisateur uniquement la supervision de la réception du signal balise BLE. Il est ainsi très simple à mettre en œuvre. Lorsque ce dispositif émetteur associé au point d'accès est installé dans un moyen de transport en mouvement, ce mode de réalisation permet de s'affranchir de toute communication avec des moyens de localisation terrestres, tels qu'une localisation satellite GPS, ou bien une localisation en fonction d'un identifiant de cellule d'un réseau cellulaire. De tels moyens de localisation fournissent une localisation absolue, qui ne peut être utilisée pour une mise en œuvre dans un environnement en mouvement. La localisation du dispositif utilisateur est ainsi relative au dispositif émetteur associé au point d'accès, qui est lui-même en mouvement.

De plus, en fonction de l'implantation du ou des dispositifs émetteurs, la zone de lecture peut être définie de manière plus précise qu'en utilisant des moyens de localisation terrestres.

Selon l'invention, l'objet numérique a été distribué en association avec un identifiant de point d'accès, dans la couverture radio duquel le dispositif utilisateur 2 doit se trouver pour lire l'objet numérique. Le dispositif émetteur ou les dispositifs émetteurs sont associés avec ce point d'accès et le signal balise diffuse un identifiant de point d'accès. Selon l'invention, à l'étape E1, le dispositif utilisateur 2 reçoit en outre un identifiant de point d'accès au moyen du canal de communication BLE. Cet identifiant est transmis du module d'interface 24 au module de contrôle 25.

Un identifiant de point d'accès correspond par exemple à l'information SSID, pour « Service Set Identifier ». Cette information SSID est une clé alphanumérique d'une longueur maximum de 32 caractères identifiant de manière unique un point d'accès. A titre d'exemple illustratif, l'information diffusée comprend un préfixe correspondant à un identifiant de l'opérateur offrant le service et un suffixe correspondant à l'identifiant du point d'accès associé. Le dispositif utilisateur 2 obtient ainsi simplement l'identifiant du point d'accès à partir de l'information diffusée. Toujours à titre d'exemple illustratif, l'information diffusée correspond à l'identifiant du point d'accès associé.

A l'étape E2, le dispositif utilisateur 2, plus précisément le module de contrôle 25, vérifie en outre si l'identifiant de point d'accès reçu correspond à l'identifiant de point d'accès associé à l'objet numérique distribué. Si tel est le cas, la lecture de l'objet numérique est autorisée (étape E4). Dans le cas contraire, la lecture de l'objet numérique est bloquée (étape E5). Cette première variante permet de bloquer la lecture lorsque le dispositif utilisateur ne se trouve plus dans la zone de couverture de la station de distribution du contenu numérique. Ainsi, la lecture de l'objet numérique est conditionnée par la présence du dispositif utilisateur dans la zone de distribution de l'objet numérique. A titre d'exemple, un magazine distribué dans un café ne peut être lu dans un autre café mettant également en œuvre la technique de contrôle. Toujours à titre d'exemple, un objet numérique distribué à partir d'un point d'accès situé dans un avion d'une compagnie aérienne ne peut être lu ultérieurement dans un avion d'une autre compagnie aérienne.

La **figure 2b** représente des étapes du procédé de contrôle de lecture pour une première variante. Dans cette deuxième variante, la distance du dispositif utilisateur 2 par rapport au dispositif émetteur est évaluée à partir d'une donnée représentative d'un signal radio RSSI, pour « Received Signal Strength Indication ». A l'étape E1, une donnée représentative du signal radio est également déterminée. Plus précisément, le module d'interface radio 24 détermine et envoie cette donnée représentative du signal radio au module de contrôle 25 à l'étape E1. Lorsqu'à l'étape E2, le dispositif utilisateur 2 a vérifié qu'une donnée a bien été reçue au moyen du canal de communication radio, lors d'une étape E3, le dispositif utilisateur 2 détermine à partir de la donnée RSSI une distance entre lui-même et le dispositif émetteur associé au point d'accès 1 et vérifie si cette distance est inférieure à une valeur seuil. Lorsque la distance est inférieure à la valeur seuil, la lecture de l'objet numérique est autorisée (étape E4). Dans le cas contraire, la lecture de l'objet numérique est bloquée (étape E5). Il est ainsi possible de limiter la zone de lecture à une partie de la zone de couverture radio du dispositif émetteur associé au point d'accès 1. Cette zone de lecture correspond grossièrement à un disque centré sur l'emplacement du dispositif émetteur et de rayon la valeur seuil. La valeur seuil est par exemple fixée à dix mètres. Ceci permet de définir plus précisément la zone de lecture pour la limiter à un lieu de service. A titre d'exemple illustratif, un objet numérique distribué à partir d'un point d'accès situé dans un avion d'une compagnie aérienne ne peut être lu dans un avion d'une autre compagnie aérienne stationné à proximité.

Optionnellement, il est également possible lorsqu'à l'étape E3, la distance est supérieure à la valeur seuil, de limiter la lecture à seulement une partie de l'objet numérique, comme par exemple une bande annonce pour un film, une page de titres pour un journal,... Ainsi, la lecture n'est pas coupée brutalement et un message peut inviter l'utilisateur à se déplacer vers la zone de lecture pour reprendre la lecture de l'objet numérique. Ainsi, pour l'exemple décrit précédemment avec une valeur seuil à dix mètres, dans la zone de lecture correspondant au disque de rayon dix mètres, la lecture est autorisée. Dans une couronne délimitée par deux cercles concentriques de rayons respectifs dix et trente mètres, la lecture est limitée. Au-delà, la lecture est bloquée et l'objet numérique peut être supprimé du dispositif utilisateur 2.

Dans une deuxième variante alternative ou cumulative à la première variante, l'objet numérique distribué est protégé par un chiffrement à base de clé secrète privée. Pour cette deuxième variante, une clé publique associée à la clé privée est diffusée par l'intermédiaire du signal balise. En l'absence de réception de cette clé publique, la lecture de l'objet numérique est impossible. Ceci permet de renforcer le contrôle de lecture dans la zone de lecture. Plus précisément, le module d'accès radio 24 transmet cette clé publique au module de contrôle 25 à l'étape El. Lorsque la lecture est autorisée à l'étape E2, le module de contrôle 25 transmet la clé publique au module de lecture 26.

Dans une troisième variante alternative ou cumulative aux variantes précédentes, lorsque des dispositifs émetteurs sont déployés de manière à assurer une couverture radio sur une zone couronne centrée sur la station de distribution d'objets numériques, l'entrée du dispositif utilisateur dans la zone de lecture est détectée par une réception d'un signal balise. Cette détection peut alors donner un droit de lecture au dispositif utilisateur, l'utilisateur étant passé par un point de passage requis.

Ce mode de réalisation et les différentes variantes ont été décrits pour un point d'accès jouant le rôle de la station de distribution d'objets numériques et comprenant également un dispositif émetteur permettant de mettre en œuvre le service de lecture.

Cette description est aisément transposable à un dispositif émetteur, comprenant un module d'accès radio de type basse consommation, associé à un point d'accès jouant le rôle de station de distribution d'objets numériques.

Cette description est également transposable à un point d'accès jouant le rôle de la station de distribution d'objets numériques et comprenant un seul module d'accès radio, par exemple Wi-Fi. Le module d'accès radio contribuant à la mise en œuvre des différentes étapes au niveau du dispositif utilisateur est alors le module d'accès radio 23. La deuxième variante du procédé de contrôle de lecture permet notamment de réduire la zone de couverture d'un tel module d'accès radio.

Aucune limitation n'est attachée à ces différents modes de réalisation et l'homme du métier est à même d'en définir d'autres en fonction des besoins du service de lecture pour la mise en œuvre de la zone de lecture.

La technique de contrôle de lecture est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en œuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Dans un mode de réalisation particulier, les modules 22, 23, 24, 25, 26 sont agencés pour mettre en œuvre le procédé de contrôle de lecture précédemment décrit. Il s'agit de préférence de modules logiciels comprenant des instructions logicielles pour faire exécuter celles des étapes du procédé de contrôle de lecture précédemment décrit, mises en œuvre par un dispositif utilisateur. L'invention concerne donc aussi :
- un programme pour un dispositif utilisateur, comprenant des instructions de code de programme destinées à commander l'exécution des étapes du procédé de contrôle de lecture précédemment décrit, lorsque ledit programme est exécuté par ce dispositif utilisateur ;
- un support d'enregistrement lisible par un dispositif utilisateur sur lequel est enregistré le programme pour un dispositif.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

L'invention concerne également un système de contrôle de lecture associé à un service de lecture, comprenant au moins un dispositif émetteur et au moins un dispositif utilisateur 2 tels que décrits précédemment.

## Revendications

1. Procédé de contrôle de lecture d'au moins un objet numérique par un dispositif utilisateur (2), ledit objet numérique ayant été distribué en association avec un identifiant de point d'accès et étant mémorisé localement par ledit dispositif utilisateur, ledit procédé comprenant :
- une réception (E1) de données diffusées par un dispositif émetteur au moyen d'un canal de communication radio, lesdites données étant diffusées au moyen d'un signal balise émis sur ledit canal, une première donnée indiquant qu'un service de lecture est offert et une deuxième donnée portant un identifiant de point d'accès, auquel ledit dispositif émetteur est associé ;
- une lecture (E4) de l'objet numérique conditionnée par la réception de ladite première donnée et par une vérification que l'identifiant de point d'accès reçu correspond à l' identifiant de point d'accès associé à l'objet numérique, une zone dans laquelle la lecture de l'objet numérique est autorisée, dite zone de lecture, se situant dans la portée radio dudit dispositif émetteur.

2. Procédé de contrôle selon la revendication 1, dans lequel, l'objet numérique étant protégé au moyen d'une clé secrète, une clé publique associée à la clé secrète est reçue en provenance du dispositif émetteur.

3. Procédé de contrôle selon la revendication 1, comprenant une estimation (E3) d'une distance entre le dispositif utilisateur et le dispositif émetteur, et dans lequel la lecture est limitée à une partie de l'objet numérique en fonction de la distance estimée.

4. Dispositif utilisateur, comprenant un module de lecture (26) d'un objet numérique ayant été distribué en association avec un identifiant de point d'accès et étant mémorisé localement par ledit dispositif utilisateur, ledit dispositif comprenant :
- un module de réception (23, 24) de données diffusées par un dispositif émetteur au moyen d'un canal de communication radio, lesdites données étant diffusées au moyen d'un signal balise émis sur ledit canal, une première donnée indiquant qu'un service de lecture est offert et une deuxième donnée portant un identifiant de point d'accès, auquel ledit dispositif émetteur est associé ;
- un module de contrôle (25) de lecture de l'objet numérique, agencé pour commander le module de lecture en fonction de la réception de ladite première donnée et par une vérification que l'identifiant de point d'accès reçu correspond à l' identifiant de point d'accès associé à l'objet numérique, une zone dans laquelle la lecture de l'objet numérique est autorisée, dite zone de lecture, se situant dans la portée radio dudit dispositif émetteur.

5. Système de contrôle de lecture, comprenant au moins un dispositif émetteur, agencé pour diffuser au moins une donnée au moyen d'un canal de communication radio et au moins un dispositif utilisateur selon la revendication 4.

6. Programme pour un dispositif utilisateur, comprenant des instructions de code de programme destinées à commander l'exécution de celles des étapes du procédé de contrôle de lecture selon l'une des revendications 1 à 3 mises en œuvre par le dispositif, lorsque ledit programme est exécuté par ledit dispositif.

7. Support d'enregistrement lisible par un dispositif utilisateur sur lequel est enregistré le programme selon la revendication 6.

## Patentansprüche

1. Verfahren zur Steuerung des Lesens mindestens eines digitalen Objekts durch ein Benutzergerät (2), wobei das digitale Objekt in Verbindung mit einer Zugangspunktkennung verteilt wurde und von dem Benutzergerät lokal gespeichert ist, das Verfahren umfassend:
- ein Empfangen (E1) von Daten, die von einer Sendevorrichtung mittels eines Funkkommunikationskanals verbreitet werden, wobei die Daten mittels eines Beacon-Signals verbreitet werden, das auf dem Kanal gesendet wird, wobei ein erstes Datenelement angibt, dass ein Lesedienst angeboten wird, und ein zweites Datenelement eine Zugangspunktkennung trägt, welcher die Sendevorrichtung zugeordnet ist;
- ein Lesen (E4) des digitalen Objekts, das durch den Empfang des ersten Datenelements und durch eine Überprüfung, dass die empfangene Zugangspunktkennung der Zugangspunktkennung entspricht, die dem digitalen Objekt zugeordnet ist, bedingt ist, wobei sich ein Bereich, in dem das Lesen des digitalen Objekts gestattet ist, der Lesebereich, in Funkreichweite der Sendevorrichtung befindet.

2. Steuerungsverfahren nach Anspruch 1, wobei, wobei das digitale Objekt mittels eines Geheimschlüssels geschützt ist, ein öffentlicher Schlüssel, der dem Geheimschlüssel zugeordnet ist, von der Sendevorrichtung empfangen wird.

3. Steuerungsverfahren nach Anspruch 1, umfassend ein Schätzen (E3) eines Abstands zwischen dem Benutzergerät und der Sendevorrichtung, und wobei das Lesen auf einen Abschnitt des digitalen Objekts in Abhängigkeit von dem geschätzten Abstand begrenzt ist.

4. Benutzergerät, umfassend ein Modul zum Lesen (26) eines digitalen Objekts, das in Verbindung mit einer Zugangspunktkennung verteilt wurde und von dem Benutzergerät lokal gespeichert ist, das Gerät umfassend:
- ein Modul zum Empfangen (23, 24) von Daten, die von einer Sendevorrichtung mittels eines Funkkommunikationskanals verbreitet werden, wobei die Daten mittels eines Beacon-Signals verbreitet werden, das auf dem Kanal gesendet wird, wobei ein erstes Datenelement angibt, dass ein Lesedienst angeboten wird, und ein zweites Datenelement eine Zugangspunktkennung trägt, welcher die Sendevorrichtung zugeordnet ist;
- ein Modul zur Steuerung (25) des Lesens des digitalen Objekts, das angeordnet ist, das Modul zum Lesen in Abhängigkeit vom Empfang des ersten Datenelements und durch eine Überprüfung, dass die empfangene Zugangspunktkennung der Zugangspunktkennung entspricht, die dem digitalen Objekt zugeordnet ist, zu steuern, wobei sich ein Bereich, in dem das Lesen des digitalen Objekts gestattet ist, der Lesebereich, in Funkreichweite der Sendevorrichtung befindet.

5. Lese-Steuerungssystem, umfassend mindestens eine Sendevorrichtung, die angeordnet ist, mindestens ein Datenelement mittels eines Funkkommunikationskanals zu verbreiten, und mindestens ein Benutzergerät nach Anspruch 4.

6. Programm für ein Benutzergerät, umfassend Programmcode-Anweisungen zur Steuerung der Ausführung derjenigen der Schritte des Lese-Steuerungsverfahrens nach einem der Ansprüche 1 bis 3, die von dem Gerät durchgeführt werden, wenn das Programm von dem Gerät ausgeführt wird.

7. Speichermedium, das von einem Benutzergerät gelesen werden kann, auf dem das Programm nach Anspruch 6 gespeichert ist.

## Claims

1. Method for controlling the reading of at least one digital object by a user device (2), said digital object having been distributed in association with an access point identifier and being stored locally by said user device, said method comprising:
- a reception (E1) of data broadcast by a transmitter device by means of a radio communication channel, said data being broadcast by means of a beacon signal transmitted over said channel, a first datum indicating that a reading service is offered and a second datum bearing an access point identifier, with which said transmitter device is associated;
- a reading (E4) of the digital object conditioned by the reception of said first datum and by a check that the access point identifier received corresponds to the access point identifier associated with the digital object, a zone within which the reading of the digital object is authorized, called reading zone, being situated within the radio range of said transmitter device.

2. Control method according to Claim 1, wherein, the digital object being protected by means of a secret key, a public key associated with the secret key is received from the transmitter device.

3. Control method according to Claim 1, comprising an estimation (E3) of a distance between the user device and the transmitter device, and wherein the reading is limited to a part of the digital object as a function of the estimated distance.

4. User device, comprising a reading module (26) for reading a digital object that has been distributed in association with an access point identifier and that is stored locally by said user device, said device comprising:
- a reception module (23, 24) for receiving data broadcast by a transmitter device by means of a radio communication channel, said data being broadcast by means of a beacon signal transmitted over said channel, a first datum indicating that a reading service is offered and a second datum bearing an access point identifier, with which said transmitter device is associated;
- a control module (25) for controlling the reading of the digital object, arranged to control the reading module as a function of the reception of said first datum and by a check that the access point identifier received corresponds to the access point identifier associated with the digital object, a zone within which the reading of the digital object is authorized, called reading zone, being situated within the radio range of said transmitter device.

5. Reading control system, comprising at least one transmitter device, arranged to broadcast at least one datum by means of a radio communication channel and at least one user device according to Claim 4.

6. Program for a user device, comprising program code instructions intended to control the execution of those of the steps of the reading control method according to one of Claims 1 to 3 implemented by the device, when said program is executed by said device.

7. Storage medium that can be read by a user device on which the program according to Claim 6 is stored.
